Europäisches Patentamt

European Patent Office

Office européen des brevets

(19)

(11) Veröffentlichungsnummer: **0 098 790
B1**

(12) **EUROPÄISCHE PATENTSCHRIFT**

(45) Veröffentlichungstag der Patentschrift:
**08.10.86**

(51) Int. Cl.⁴: **G 01 L  1/26**, G 01 L  5/00

(21) Anmeldenummer: **83710041.1**

(22) Anmeldetag: **22.06.83**

(54) **Anordnung für hermetisch zu verschliessende Lastzellen.**

(30) Priorität: **01.07.82  SE 8204072**

(43) Veröffentlichungstag der Anmeldung:
**18.01.84 Patentblatt 84/3**

(45) Bekanntmachung des Hinweises auf die Patenterteilung:
**08.10.86 Patentblatt 86/41**

(84) Benannte Vertragsstaaten:
**DE FR GB IT**

(56) Entgegenhaltungen:
**DE - B - 1 648 700
DE - C - 1 125 205
US - A - 3 168 826
US - A - 3 303 450**

(73) Patentinhaber: **ASEA AB, S-721 83 Västeras (SE)**

(72) Erfinder: **Sture, Siby, Violstigen 11A, S-72227 Västeras (SE)**

(74) Vertreter: **Boecker, Joachim, Dr.-Ing.,
Rathenauplatz 2-8, D-6000 Frankfurt a.M. 1 (DE)**

## Beschreibung

Die vorliegende Erfindung betrifft eine Anordnung für hermetisch zu verschliessende Lastzellen gemäss dem Oberbegriff des Anspruches 1. Eine solche Anordnung ist beispielsweise bekannt aus der US-PS 3 168 826.

Zur Vermeidung einer Beeinflussung des Messwertes durch äussere Druckschwankungen wird bei bekannten Anordnungen der genannten Art das kraftmessende oder kraftübertragende Element mit dem umgebenden Lastzellengehäuse oben und unten über gleich grosse Membrane verbunden, wodurch man ein Kräftegleichgewicht erzielt. Siehe beispielsweise die US-PS 3 168 826. Diese Lösung hat den Nachteil, dass in der Praxis die untere Seite des Lastzellengehäuses schädlichen Einflüssen ausgesetzt sein kann, welche das ordnungsgemässe Arbeiten der Kompensationseinrichtung verhindern. So kann es beispielsweise in den feuchten Wiegegruben bei Waagen für Fahrzeuge leicht zu einer Verstopfung der Luftzuführungskanäle zu der von unten zugänglichen Membran kommen, so dass an ihr der Aussendruck nicht mehr wirksam werden kann.

Der Erfindung liegt die Aufgabe zugrunde, eine Anordnung der eingangs genannten Art zu entwickeln, bei der die Kompensationseinrichtung von den Umgebungsverhältnissen an der unteren Seite des Lastzellengehäuses nicht nachteilig beeinflusst werden kann.

Zur Lösung dieser Aufgabe wird eine Anordnung gemäss dem Oberbegriff des Anspruches 1 vorgeschlagen, welche erfindungsgemäss die im kennzeichnenden Teil des Anspruches 1 genannten Merkmale hat.

Vorteilhafte Ausgestaltungen der Erfindung sind in den weiteren Ansprüchen genannt.

Gemäss der Erfindung ist die für die Druckkompensation notwendige Membran oberhalb des Lastgebers etwas unterhalb der normalen Verschlussmembran angeordnet. Hierbei werden insgesamt drei zueinander parallele Membrane benutzt, die vakuumdicht zwischen einem vorzugsweise zylindrischen kraftübertragenden Glied und einem dieses Glied umgebenden, vorzugsweise rotationssymmetrisch ausgebildeten Gehäuse dichtend befestigt sind. Eine Innenmembran grenzt an den Geberraum, eine vorzugsweise gleich grosse Aussenmembran grenzt nach aussen an die umgebende Atmosphäre an, und dazwischen befindet sich eine Zwischenmembran, die bedeutend grösser als die Summe der beiden anderen Membrane ist. Der Raum zwischen der Aussenmembran und der Zwischenmembran steht mit dem Geberraum in Verbindung. Der Raum zwischen der Zwischenmembran und der Innenmembran steht mit dem Aussenraum, regelmässig die Aussenatmosphäre, in Verbindung. Ein Unterschied zwischen dem Druck im Geberraum und dem Aussendruck führt zu Kräften, die in derselben Richtung auf die Innenmembran und die Aussenmembran wirken, und mit entgegengesetzter Richtung auf die Zwischenmembran wirken. Bei geeigneter Bemessung der effektiven Fläche der letztgenannten Membran kann daher ein von Druckänderungen unabhängiges Kräftegleichgewicht erreicht werden.

Eine, zwei oder alle der genannten Membrane können durch starre Scheiben ersetzt werden, die einerseits starr und dichtend an dem kraftübertragenden Glied befestigt sind und andererseits über Balgen an dem umgebenden Gehäuse dichtend befestigt sind.

Anhand der in den Figuren gezeigten Ausführungsbeispiele soll die Erfindung näher erläutert werden. Es zeigen

Fig. 1 eine erste Ausführungsform der Erfindung mit Membranen als elastisch federnde Elemente,

Fig. 2 eine Ausführungsform der Erfindung, bei der eines der elastisch federnden Elemente aus einer mit einem Balgen versehenen starren Scheibe besteht,

Fig. 3 eine Ausführungsform der Erfindung, bei der alle drei elastisch federnden Elemente aus mit Balgen versehenen starren Scheiben bestehen.

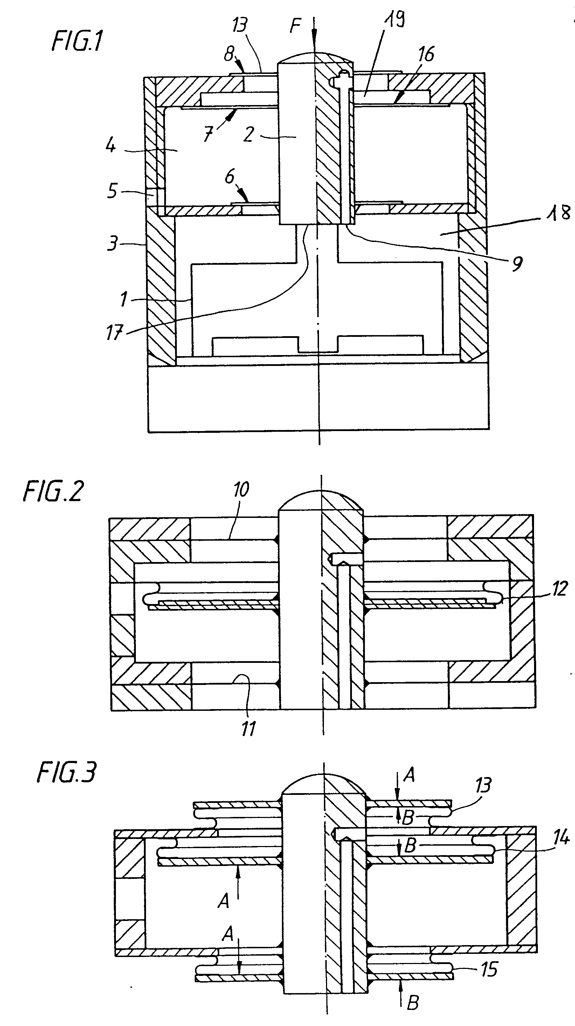

In Figur 1 bezeichnet 1 einen Lastgeber beispielsweise gemäss dem schwedischen Patent 151 267. Die Kraft (F), also die Belastung, das Gewicht usw., wird über ein kraftübertragendes Glied 2 auf den Lastgeber 1 übertragen. Das Glied 2 ist vorzugsweise ein zylindrischer Stift mit dem Durchmesser d. Das Glied 2 hat an der mit 17 bezeichneten Stelle Kontakt mit dem Lastgeber.

Der Lastgeber 1 befindet sich in einem Geberraum, der von einem Lastzellengehäuse 3 gebildet wird. Der Druck im Geberraum kann infolge von Temperaturschwankungen oder aus anderen Gründen sich verändern, was bei fehlender Kompensation einen Messfehler des Lastgebers 1 verursachen würde.

Zwischen der Mantelfläche des kraftübertragenden Gliedes 2 und einem umgebenden zylindrischen Gehäuse 4 sind drei zueinander parallele Membranen 6, 7, 8 durch Löten oder auf andere Weise vakuumdicht befestigt. Um die Kraft F mit einem so kleinen Verlust wie möglich auf den Geber 1 zu übertragen, muss das Glied 2 federnd an dem Lastzellengehäuse 3 mittels der beiden äusseren federnden Membranen 6 und 8 aufgehängt sein. Diese Membranen haben auch die Aufgabe, den Geberraum nach aussen abzuschliessen, und in gewissen Fällen sollen sie auch eine Seitenlast aufnehmen können.

Der Raum zwischen der Innenmembran 6 und der Zwischenmembran 7 steht über einen Kanal 5 mit der Aussenatmosphäre in Verbindung.

Der Geberraum steht mit dem Raum zwischen der Aussenmembran 8 und der Zwischenmembran 7 über einen Kanal 9 in Verbindung, der durch das Glied 2 verläuft oder auf andere Weise angeordnet ist.

Die Druckdifferenz zwischen Aussendruck und Innendruck wirkt in gleicher Richtung auf die Innenmembran 6 und auf die Aussenmembran 8, und bei gleich grossen Flächen dieser Membrane 6 und 8 sind auch die in dieser Richtung auf die Membrane wirkenden Kräfte gleich gross. Hinzu kommt die durch den Druckunterschied auf das Glied 2 ausgeübte Kraft. Der genannte Druckunterschied wirkt auf die kompensierende Zwischenmembran 7 mit einer Kraft in entgegengesetzter Richtung, und wenn diese Membran eine effektive Fläche hat, die genau so gross ist, wie die Querschnittsfläche des Gliedes 2 und die effektiven Flächen der Membranen 6 und 8, so erhält man, unabhängig von allen Druckveränderungen einen vollständigen Kraftausgleich.

Die Anordnung zur Kompensation äusserer Luftdruckschwankungen und innerer Druckveränderungen in einer Lastzelle infolge von Temperaturänderungen kann vorteilhaft als separate Anordnung ausgebildet sein. Sie kann dann vor dem Einbau des Lastzellengehäuses 3 getrimmt und kontrolliert werden. Die in Figur 1 gezeigte Ausführungsform kann eine gewisse Seitenlast aufnehmen, was auch für die Ausführungsform nach Figur 2 gilt, während die Ausführungsform nach Figur 3 keine Seitenlast aufnehmen kann.

In Figur 2 sind Membrane 10 und 11 vorhanden, während 12 eine der Kompensation dienende, mit einem Balgen versehene starre Scheibe ist. Ihre Wirkung ist im Prinzip dieselbe wie die der Membran 7 in Figur 1.

Bei der Ausführungsform nach Figur 3 sind im Verhältnis zu Figur 1 alle Membranen durch mit Balgen versehene starre Scheiben 13, 14, 15 ersetzt worden. Durch ihre geeignete Bemessung kann auch hier die Summe der Kräfte zu Null gemacht werden.

**Patentansprüche**

1. Anordnung für hermetisch zu verschliessende Lastzellen (1, 2, 3) zur Beseitigung des Einflusses von Unterschieden zwischen dem Druck im Geberraum (18) und dem Aussendruck auf den Messwert mit einem vorzugsweise zylindrischen kraftübertragenden Glied (2), einem umgebenden, vorzugsweise rotationssymmetrischen Gehäuse (3) und zwei parallelen, vacuumdicht schliessenden, elastisch federnden Elementen (6, 8), von denen eines ein Aussenelement (8) und eines als Innenelement (6) den Geberraum (18) dichtet, dadurch gekennzeichnet, dass das Aussenelement (8) mit Hilfe eines dritten vacuumdicht schliessenden, elastisch federnden Elementes (Zwischenelement) (7), welches parallel zu und zwischen dem Innenelement (6) und dem Aussenelement (8) angeordnet ist, einen Raum (19) bildet, der mit dem Geberraum verbunden ist, dass der Raum zwischen dem Innenelement (6) und dem Zwischenelement (7) mit dem Aussendruck (5) verbunden ist und dass die effektive Fläche des Zwischenelements (7) um so viel grösser als die Summe der effektiven Flächen der beiden anderen Elemente (8, 6) ist, dass unabhängig von dem Unterschied zwischen dem Druck im Geberraum und dem Aussendruck ein Kräftegleichgewicht besteht.

2. Anordnung nach Anspruch 1, dadurch gekennzeichnet, dass die vacuumdicht schliessenden und elastisch federnden Elemente (6–8) Membranen sind.

3. Anordnung nach Anspruch 1, dadurch gekennzeichnet, dass die vacuumdicht schliessenden und elastisch federnden Elemente starre Scheiben sind, die an dem kraftübertragenden Glied (2) befestigt sind und mittels Balgen an dem umgebenden Gehäuse dichtend angeschlossen sind.

**Revendications**

1. Dispositif prévu pour des cellules de charge (1, 2, 3) devant être fermées de façon hermétique, et servant à supprimer l'influence de différences entre la pression régnant dans l'espace (18) contenant le transmetteur et la pression extérieure, sur la valeur de mesure, et comportant un organe de transmission de force (2), de préférence cylindrique, un boîtier enveloppant (3), de préférence à symétrie de révolution et deux éléments élastiques parallèles (6, 8), qui réalisent une fermeture étanche au vide et dont l'un est un élément extérieur (8), et dont l'autre, servant d'élément intérieur (6), ferme de façon étanche l'espace (18) contenant le transmetteur, caractérisé par le fait que l'élément extérieur (8) forme au moyen d'un troisième élément élastique (élément intermédiaire) (7), qui réalise une fermeture étanche au vide et est disposé parallèlement entre l'élément intérieur (6), et l'élément extérieur (8), un espace (19) qui est relié à l'espace contenant le transmetteur, que l'espace entre l'élément intérieur (6) et l'élément intermédiaire (7) est relié à la pression extérieure (5) et que la surface active de l'élément intermédiaire (7) est d'autant plus supérieure à la somme des surfaces actives des deux autres éléments (8, 6) qu'il existe un équilibre des forces indépendamment de la différence entre la pression dans l'espace contenant le transmetteur et la pression extérieure.

2. Dispositif suivant la revendication 1, caractérisé par le fait que les éléments élastiques (6–8), qui réalisent une fermeture étanche au vide, sont des membranes.

3. Dispositif selon la revendication 1, caractérisé en ce que les éléments élastiques, qui réalisent une fermeture étanche au vide, sont des disques rigides qui sont fixés à l'organe de transmission de force (2) et sont raccordés d'une manière étanche au boîtier enveloppant, au moyen de soufflets.

**Claims**

1. Device for hermetically sealed load cells (1, 2, 3) for eliminating the effect of differences between the pressure in the transmitter space (18) and the ambient pressure on the measuring value comprising a preferably cylindrical force-transmitting member (2), a surrounding preferably rotational-symmetric housing (3) and two parallel vacuum-tightly closing elastically resilient elements (6, 8) one of which is an outer element (8) while the other one, as in inner element (6), seals the transmitter space (18), characterized in that the outer element (8) with the help of a third vacuum-tightly closing elastically resilient element (intermediate element) (7), which is arranged parallel with and between the inner element (6) and the outer element (8), defines a space (19) communicating with the transmitter space, that the space between the inner element (6) and the intermediate element (7) communicates with the ambient pressure (5), and that the effective surface of the intermediate element (7) is larger than the sum of the effective surfaces of the other two elements (8, 6) to such an extent, that a balance of forces is obtained independently of the difference between the pressure in the transmitter space and the ambient pressure.

2. Device according to claim 1, characterized in that the vacuum-tightly closing and elastically resilient elements (6–8) are membranes.

3. Device according to claim 1, characterized in that the vacuum-tightly closing and elastically resilient elements are formed of rigid disks, which are secured to the force-transmitting member (2) and are sealingly connected to the surrounding housing by means of bellows.

FIG.1

FIG.2

FIG.3